**Europäisches Patentamt**

**European Patent Office**

**Office européen des brevets**

(19)

(11) Veröffentlichungsnummer: **0 534 513 B1**

(12) # EUROPÄISCHE PATENTSCHRIFT

(45) Veröffentlichungstag der Patentschrift: **09.08.95**

(51) Int. Cl.[6]: **C01B 17/90**, B01D 61/44

(21) Anmeldenummer: **92202536.6**

(22) Anmeldetag: **18.08.92**

(54) **Verfahren zur Aufarbeitung von Abfallschwefelsäure.**

(30) Priorität: **24.09.91 DE 4131794**

(43) Veröffentlichungstag der Anmeldung:
**31.03.93 Patentblatt 93/13**

(45) Bekanntmachung des Hinweises auf die
Patenterteilung:
**09.08.95 Patentblatt 95/32**

(84) Benannte Vertragsstaaten:
**AT BE CH DE DK ES FR GB GR IT LI LU NL PT SE**

(56) Entgegenhaltungen:
**EP-A- 0 247 713**
**EP-A- 0 405 619**
**WO-A-90/06168**
**DE-A- 3 713 143**
**US-A- 4 717 450**

**M.M. MASCHINENMARKT Bd. 97, Nr. 22, 1991, WÜRZBURG Seiten 20 - 25 R. SCHEIN 'Dialyse zum Rückgewinnung von reinen Säuren aus verunreinigten Lösungen.'**

(73) Patentinhaber: **METALLGESELLSCHAFT Aktiengesellschaft**
**Postfach 10 15 01,**
**Reuterweg 14**
**D-60015 Frankfurt (DE)**

(72) Erfinder: **Brücken, Volker**
**Wiesbadener Strasse 126**
**W-6240 Königstein (DE)**
Erfinder: **Pötzschke, Manfred, Dr.**
**Ulmenweg 45**
**W-6242 Kronberg (DE)**
Erfinder: **Langner, Bernd, Dr.**
**Schlehenweg 23**
**W-2090 Winsen/L (DE)**
Erfinder: **Stelter, Michael, Dr.**
**Ziegelholz 12**
**W-2090 Winsen/L (DE)**

EP 0 534 513 B1

**Beschreibung**

Die Erfindung betrifft ein Verfahren zur Aufarbeitung von mit Halogeniden, insbesondere Chlorid, Fluorid und Bromid, verunreinigter Abfallschwefelsäure mit einem Säuregehalt von bis zu 40 %.

Bedeutende Quellen für die Entstehung von Abfallschwefelsäure sind u.a. die metallurgische und chemische Industrie sowie Energieversorgungsunternehmen. So fallen z.B. bei der thermischen Behandlung schwefelhaltiger Roh-, Hilfs- und Reststoffe Abfallschwefelsäuren mit bis zu 40 Vol.% Schwefelsäure an, die mit Halogeniden, vorzugsweise Chlorid, Fluorid und Bromid, verunreinigt sind. Die bisher übliche Beseitigung solcher Abfallschwefelsäuren mit relativ niedrigem Schwefelsäuregehalt durch Verklappung im Meer oder Neutralisation mit Kalkmilch oder Natronlauge und Deponierung des anfallenden Gipses bzw. Hydroxidschlamms sowie Einleitung der gelösten Neutralsalze wie $CaBr_2$, $CaCl_2$ bzw. NaBr, NaCl und $Na_2SO_4$ in Flüsse oder ins Meer wird in Zukunft wegen verschärfter Umweltschutzauflagen sowie kleiner und erheblich teurer werdender Deponieräume immer problematischer. Daher gewinnt die Aufarbeitung von solchen Abfallschwefelsäuren zunehmend an Bedeutung.

Bekannt ist aus der Z.: MM Maschinenmarkt 97 (1991), 22, S. 20-25, die Aufarbeitung von mit Metall-Ionen verunreinigter Abfallsäure mit Hilfe der mit Ionenaustauschermembranen arbeitenden Dialyse vorzunehmen, bei der als treibende Kraft allein ein Konzentrationsgradient wirkt, der bestimmte Stoffe zum Wandern durch semipermeable Membranen veranlaßt. Fremdenergie wie Druck oder elektrischer Strom ist dazu nicht erforderlich. Die Dialysevorrichtung besteht aus einem Membranstapel und Abstandshalter bildenden Zwischenkammern, in denen abwechselnd Abfallsäure von unten nach oben und Wasser von oben nach unten entlang der Membranen fließt. Die unterschiedliche Elektrolytkonzentration der beiden Ströme wird dadurch ausgeglichen, daß nur die Säure-Ionen durch die Membranen treten und die Metall-Ionen zurückgehalten werden. Das Gegenstromprinzip führt dazu, daß über die gesamte Länge der Membranen eine maximale Konzentrationsdifferenz aufrechterhalten wird und so ein weitgehendes Abtrennen der freien Säure in einem Durchgang durch den Stapel erfolgt. Die klassische Anwendung der Dialyse liegt im Bereich der Oberflächentechnik wie Rückgewinnen von Beizsäuren und Ätz-Elektrolyten. In der Regel ist dabei die Säure der Wertstoff, der abgetrennt und im Kreis zurück in das Beizbad geführt wird, während die Metalle aus dem System ausgeschleust werden müssen, um ein Anreichern zu vermeiden.

Die EP-A-0 405 619 befaßt sich mit einem Verfahren zum Behandeln von Chlor enthaltendem Abwasser aus einer Rauchgas-Kühleinrichtung einer Rauchgas-Entschwefelungsanlage, wobei das Abwasser zur Trennung in Konzentrat und Wasser einer Elektrodialyse unterworfen wird. In der WO-A-90 06 168 ist ein Verfahren zur Abtrennung von Säure aus Säure und Metallsalz enthaltender wäßriger Lösung vorgesehen; dabei wird die wäßrige Lösung einer Elektrodialyseanlage, bestehend aus wenigstens einer zwischen zwei Anionenmembranen angeordneten bipolaren, eine Kationen- und eine Anionenschicht aufweisenden Membran, aufgegeben.

Aufgabe der vorliegenden Erfindung ist es, ein Verfahren zur Aufarbeitung von mit Halogeniden, insbesondere Chlorid, Fluorid und Bromid, verunreinigter Abfallschwefelsäure bereitzustellen, mit dem sich aus größeren Mengen Abfallschwefelsäure mit relativ einfacher Anlagentechnik und vergleichsweise geringem Energiebedarf in vergleichsweise kurzer Zeit Chlorid, Fluorid und Bromid abtrennen lassen.

Die Lösung dieser Aufgabe besteht darin, daß die mit Halogeniden, vorzugsweise Chlorid, Fluorid und Bromid, verunreinigte, einen Säuregehalt von bis zu 40 % aufweisende Abfallschwefelsäure einer Elektrodialyse unterworfen wird, bei der unter dem Einfluß des elektrischen Feldes die einwertigen Halogenide die Anionenaustauschermembran durchdringen und selektiv abgetrennt werden, während die zweiwertigen Sulfat-Ionen der Schwefelsäure weitgehend zurückgehalten werden, so daß eine nahezu vollständig von Halogeniden gereinigte Schwefelsäure die Elektrodialyse verläßt.

Die abgetrennten Halogenide werden in einem separaten Kreislauf aufkonzentriert. Die Abtrennung der Halogenide erfolgt je nachdem, in welcher Form diese in der verunreinigten Abfallschwefelsäure vorliegen, entweder als Neutralsalz oder als Halogenwasserstoffsäure, wie z.B. Salzsäure, Flußsäure und Bromwasserstoffsäure.

Ein weiterer Kreislauf der Elektrodialyse ist für die Elektrodenspülung vorgesehen. Diese besteht vorzugsweise aus einem Elektrolyten, der keine Schadgase freisetzt. Eine solche Maßnahme ist zur Vermeidung von Chlorgasbildung insbesondere dann angebracht, wenn mit hohen Stromdichten, d.h. mit hohen Anodenpotentialen gefahren wird.

Für den die Halogenide enthaltenden Konzentratkreislauf wird zweckmäßigerweise Salzsäure mit einem Säuregehalt von maximal 1,0 %, vorzugsweise 0,1 bis 0,5 %, und für den Kreislauf der Elektrodenspülung Schwefelsäure mit einem Säuregehalt von bis zu 5,0 %, vorzugsweise 0,1 bis 2,5 %, verwendet.

Im Rahmen der besonderen Ausgestaltung des erfindungsgemäßen Verfahrens betragen der Volumenstrom der mit Halogeniden verunreinigten Abfallschwefelsäure 5 bis 100, vorzugsweise 20 bis 50 $l/m^2 \cdot h$,

und die mittlere Stromdichte 5 bis 50, vorzugsweise 10 bis 20 mA/cm$^2$.

Gemäß der Z.: MM Maschinenmarkt 97 (1991), 22, S. 20-25, ist zwar bekannt, daß eine Salz-Säure-Trennung unter Anwendung der Elektrodialyse mit bipolaren Membranen nach dem Zweikammerprinzip erfolgen kann, wobei mit dem Anlegen eines elektrischen Gleichspannungsfeldes die Säure-Anionen über eine Anionenaustauschermembran aus der Abfallsäure entfernt und mit Protonen, die an einer bipolaren Membran generiert werden, zur freien Säure ergänzt werden, während die Metall-Kationen zurückgehalten und ausgeschleust werden. An die Aufarbeitung von Abfallschwefelsäure, die mit Halogeniden verunreinigt ist, ist jedoch dabei nicht gedacht.

Eine Vorrichtung zur Durchführung des Verfahrens besteht darin, daß zwischen einem Elektrodenpaar Anionen- und Kationen-Austauschermembranen in alternierender Reihenfolge unter Bildung von Kammern zwischen zwei benachbarten Membranen angeordnet sind, in denen alternierend die mit den Halogeniden verunreinigte Abfallschwefelsäure und das im Kreislauf geführte Konzentrat von unten nach oben entlang der Membranen fließen. Die Spülung der Elektroden erfolgt im Kreislauf ebenfalls von unten nach oben.

Die Erfindung ist nachfolgend anhand eines Ausführungsbeispiels und des Verfahrensprinzips der Elektrodialyse näher erläutert.

Vor Schwefelsäure-Kontaktanlagen fallen bei der notwendigen Reinigung der schwefeldioxidhaltigen Gase halogenidhaltige Abfallschwefelsäuren an. Zur Enthalogenisierung derartig verunreinigter Abfallschwefelsäure wird diese mit einem Volumenstrom (1) von 25 l/m$^2$•h aus einer aus mehreren Zellen (2,3,4,5,6,7) aufgebauten Elektrodialyse-Anlage (8) mit alternierender Schaltung von 10 anionen- und 11 kationenselektiven Membranen (9,10,11,12,13) mit insgesamt 0,372 m$^2$ effektiver Membranfläche aufgegeben. In den Zellen (2,7) strömt 1 %ige Schwefelsäure (14) zur Spülung der Kathode (15) und der Anode (16), an die sich alternierend mehrere Zellen (3,4,5,6) anschließen, bzw. in denen die zu behandelnde Abfallschwefelsäure mit einer 0,2 %igen Salzsäure das Konzentrat (17) im Kreislauf strömt.

In nachfolgender Tabelle sind in Abhängigkeit von der Zellspannung (5, 10, 20 U$_z$/V) die ionenspezifischen Abtrennungsgrade aufgeführt. Ausgehend von einer Zusammensetzung der verunreinigten Abfallschwefelsäure mit

| Cl | 5,3 g/l |
|----|---------|
| F | 3,0 g/l |
| Br | 0,2 g/l |
| SO$_4$ | 18,5 g/l |

erfolgt die günstigste Enthalogenisierung bei einer Zellspannung von 10 V und einer mittleren Stromdichte von 12 mA/cm$^2$.

Nach einer zweistufigen Elektrodialysebehandlung der Abfallschwefelsäure sind Chlorid zu 80 %, Bromid zu 90 % und Fluorid zu 13 % von der Abfallschwefelsäure abgetrennt. Das Sulfat, gebunden als Schwefelsäure, wird zu 29 % mitsepariert. Die vergleichsweise nicht ausreichende Überführung des Fluorids ist vermutlich darauf zurückzuführen, daß komplexe Fluorverbindungen vorliegen.

| Versuchsbedingungen | | | Anionen in g/l, Abtrennungsgrad in % | | | | | | | |
|---|---|---|---|---|---|---|---|---|---|---|
| V̇ (l/h·m⁻²) | Uz (V) | i (mA·cm⁻²) | Stufe | Cl⁻ | | F⁻ | | Br⁻ | | SO₄²⁻ |
| 25 | 5 | 5 | 1 | 3,9 | 26 | 2,8 | 7 | 0,1 | 50 | 17,4 | 6 |
| 25 | 5 | 5 | 2 | 2,3 | 57 | 2,6 | 13 | 0,05 | 75 | 15,1 | 18 |
| 25 | 5 | 5 | 3 | 1,4 | 74 | 2,4 | 20 | 0,02 | 90 | 13,7 | 26 |
| 25 | 5 | 5 | 4 | 0,8 | 85 | 2,2 | 26 | 0,01 | >95 | 12,0 | 35 |
| 25 | 10 | 19 | 1 | 2,5 | 53 | 2,9 | 3 | 0,06 | 70 | 15,4 | 17 |
| 25 | 10 | 12 | 2 | 1,1 | 80 | 2,6 | 13 | 0,02 | 90 | 13,1 | 29 |
| 25 | 10 | 10 | 3 | 0,35 | 93 | 2,2 | 26 | 0,01 | >95 | 10,3 | 44 |
| 25 | 10 | 9 | 4 | 0,11 | 98 | 1,7 | 43 | 0,01 | >95 | 7,6 | 59 |
| 25 | 20 | 60 | 1 | 0,9 | 83 | 1,7 | 43 | 0,02 | 90 | 7,6 | 59 |
| 25 | 20 | 18 | 2 | 0,12 | 98 | 0,6 | 80 | 0,01 | >95 | 2,2 | 88 |
| 25 | 20 | 7 | 3 | 0,02 | >99 | 0,2 | 93 | 0,01 | >95 | 0,8 | 95 |
| 25 | 20 | 2 | 4 | 0,01 | >99 | 0,2 | 93 | 0,01 | >95 | 0,7 | 96 |
| 50 | 10 | 13 | 1 | 3,35 | 37 | 2,80 | 6 | 0,08 | 60 | 17,2 | 7 |
| 50 | 10 | 12 | 2 | 2,15 | 60 | 2,65 | 12 | 0,03 | 85 | 16,1 | 13 |
| 50 | 10 | 10 | 3 | 1,40 | 73 | 2,55 | 15 | 0,02 | 90 | 14,5 | 22 |
| 50 | 10 | 10 | 4 | 0,85 | 84 | 2,35 | 22 | 0,01 | >95 | 12,9 | 30 |
| Ausgangslösung | | | | 5,3 | | 3,0 | | 0,2 | | 18,5 | |

Um den relativ großen Schwefelsäureschlupf zu minimieren, wird der Volumenstrom an Abfallschwefelsäure auf 50 l/m²•h erhöht und bei einer Zellspannung von 10 V der Elektrodialyse unterworfen. Die geringste Sulfatüberführung bei guter Abtrennung der Halogenide wird nach zweimaliger Elektrodialyse der Abfallschwefelsäure erreicht. Die Abfallschwefelsäure wird zu 60 % von Chlorid, 85 % von Bromid und 13 % von Fluorid gereinigt. Der Sulfatverlust beträgt 13 %.

Die mit der Erfindung erzielten Vorteile sind insbesondere darin zu sehen, daß ein wesentlicher Teil der Abfallschwefelsäure in den Produktionsprozeß zurückführbar ist, so daß daraus ein verkaufsfähiges Produkt entsteht. Da die Halogenide aus Abfallschwefelsäuren problemlos selektiv abtrennbar sind und der Sulfatschlupf relativ gering ist, kann somit der Aufwand für Neutralisation und Deponierbarkeit deutlich gesenkt werden. Das ist verbunden mit einer erheblichen Verringerung der in dem Vorfluter abgegebenen Neutralsalze und ebenso der Abwassermengen.

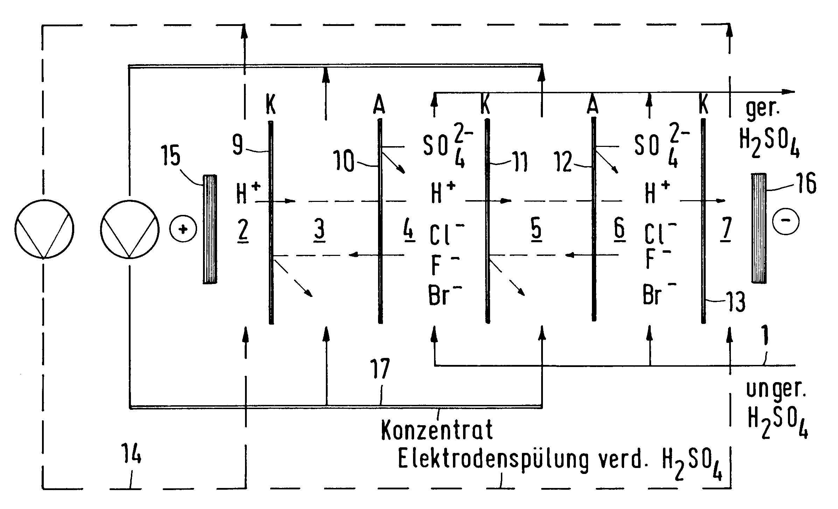

**Patentansprüche**

1. Verfahren zur Aufarbeitung von veruntreinigter Abfallsäure mittels Elektrodialyse, dadurch gekennzeichnet, daß eine mit Halogeniden, insbesondere Chlorid, Fluorid und Bromid, verunreinigter Abfallschwefelsäure mit einem Säuregehalt von bis zu 40 % einer Elektrodialyse unterworfen und ein die Halogenide enthaltendes Konzentrat selektiv abgetrennt wird, bei der unter dem Einfluß des elektrischen Feldes die einwertigen Halogenide eine Anionenaustauschmembran durchdringen, während die zweiwertigen Sulfat-Ionen zurückgehalten werden, und das die abgetrennten Halogenide enthaltende Konzentrat im Kreislauf geführt wird.

2. Verfahren nach Anspruch 1, dadurch gekennzeichnet, daß die Elektroden mittels eines im Kreislauf geführten Elektrolyten gespült werden.

3. Verfahren nach den Ansprüchen 1 und 2, dadurch gekennzeichnet, daß die Konzentratlösung aus maximal 1,0 %iger, vorzugsweise 0,1 bis 0,5 %iger Salzsäure besteht.

4. Verfahren nach Anspruch 2, dadurch gekennzeichnet, daß der Elektrolyt aus maximal 5,0 %iger, vorzugsweise 0,1 bis 2,5 %iger Schwefelsäure besteht.

5. Verfahren nach den Ansprüchen 1 bis 4, dadurch gekennzeichnet, daß der Volumenstrom an Abfallschwefelsäure 5 bis 100, vorzugsweise 20 bis 50 l/m$^2$•h beträgt.

6. Verfahren nach den Ansprüchen 1 bis 5, dadurch gekennzeichnet, daß die mittlere Stromdichte 5 bis 50, vorzugsweise 10 bis 20 mA/cm$^2$ beträgt.

**Claims**

1. A method for processing contaminated waste acid by means of electrodialysis, characterised in that a waste sulphuric acid contaminated with halides, in particular chloride, fluoride and bromide, and having an acid content of up to 40% is subjected to electrodialysis and a concentrate containing the halides is separated off selectively, in which under the influence of the electrical field the monovalent halides penetrate through an anion-exchange membrane, whereas the bivalent sulphate ions are retained, and the concentrate containing the halides which have been separated off is recirculated.

2. A method according to Claim 1, characterised in that the electrodes are purged by means of an electrolytic which is recirculated.

3. A method according to Claims 1 and 2, characterised in that the concentrate solution consists of at most 1.0%, preferably 0.1 to 0.5%, hydrochloric acid.

4. A method according to Claim 2, characterised in that the electrolyte consists of at most 5.0%, preferably 0.1 to 2.5%, sulphuric acid.

5. A method according to Claims 1 to 4, characterised in that the volumetric flow rate of waste sulphuric acid is 5 to 100, preferably 20 to 50, l/m$^2$ • h.

6. A method according to Claims 1 to 5, characterised in that the average current density is 5 to 50, preferably 10 to 20, mA/cm$^2$.

**Revendications**

1. Procédé pour le traitement d'acide usé contenant des impuretés, au moyen d'une électrodialyse, caractérisé en ce qu'on soumet à une électrodialyse un acide sulfurique usé contenant des impuretés d'halogénures, en particulier du chlorure, du fluorure et du bromure, avec une teneur en acide allant jusqu'à 40%, et on sépare sélectivement un concentrat contenant les halogénures, dans lequel, sous l'influence du champ électrique, les halogénures monovalents traversent une membrane échangeuse d'anions, tandis que les ions sulfate bivalents sont retenus, et le concentrat contenant les halogénures séparés est mis en circulation.

2. Procédé selon la revendication 1, caractérisé en ce qu'on lave les électrodes au moyen d'un électrolyte mis en circulation.

3. Procédé selon les revendications 1 et 2, caractérisé en ce que la solution de concentrat est constituée d'acide chlorhydrique au maximum à 1,0%, de préférence de 0,1 à 0,5%.

4. Procédé selon la revendication 2, caractérisé en ce que l'électrolyte est constitué d'acide sulfurique au maximum à 5,0%, de préférence de 0,1 à 2,5%.

5. Procédé selon les revendications 1 à 4, caractérisé en ce que le débit volumique de l'acide sulfurique usé s'élève de 5 à 100, de préférence de 20 à 50 l/m$^2$.h.

6. Procédé selon les revendications 1 à 5, caractérisé en ce que la densité moyenne de courant s'élève de 5 à 50, de préférence de 10 à 20 mA/cm$^2$.